# EUROPEAN PATENT APPLICATION

(11) **EP 4 635 696 A1**
(43) Date of publication of application: **22.10.2025**
(21) Application number: 25170425.0
(22) Date of filing: 14.04.2025
(51) Int. Cl.: B28B 1/00, B28B 3/12, B28B 5/02, B28B 11/24, B28B 23/00, B30B 5/04, C04B 14/06, C04B 14/30, C04B 20/00, C04B 40/02, C04B 20/02, C04B 30/00, C04B 35/18, C04B 37/04, C04B 35/626

(54) **METHOD FOR PRODUCING ARTIFICIAL STONE SLABS AND RELATIVE SLAB**

(30) Priority: 15.04.2024 IT 202400008515
(71) Applicant: Laminam SpA, 41042 Fiorano Modenese (IT)
(72) Inventor: PEROZZI, Michele Patrizio, 41042 Fiorano Modenese (MO) (IT)
(74) Representative: Cantaluppi, Stefano

(57) **Abstract**

The present invention relates to a method (900) for producing artificial stone slabs comprising grinding (901) an inert material comprising silicates having an aluminium oxide content greater than or equal to 25% by weight, until a mixture of granulated material is obtained in which a coarse fraction of granules, having a diameter greater than 300 µm, is 70% by weight of the total weight of the mixture. The method (900) further comprises spraying and drying (902) a suspension comprising the granulated material by means of an atomizing device until an atomized material is obtained. Furthermore, the method comprises depositing (903) the atomized material on at least one movable surface of a compacting device and compacting (904) the atomized material on the movable surface, to obtain a slab of compacted material. The method (900) further comprises heating (906) the slab of compacted material to a temperature between 50°C and 1250°C, for a time period of less than or equal to 45 min and greater than or equal to 10 min, to obtain a slab of consolidated material.

## Description

### Technical field

The present invention relates to a method for producing artificial stone slabs, in particular from ceramic material, and a product obtained in this manner.

### Technological background

The present invention is used in a preferable though non-exclusive manner in the sector of producing slabs which are intended mainly for producing coverings indoors and outdoors.

The ceramics industry is increasingly directed towards obtaining products which are provided with great versatility and which can be used as coverings of structural elements or furniture elements or, even more generally, to constitute decorative elements reproducing more and more faithfully the appearance of extremely varied materials such as wood, marble, cement and the like.

In this context, this has given rise to the need to provide artificial stone slabs with increasingly great dimensions, to be used in covering surfaces with a relevant extent because such materials are provided with optimum technical characteristics together with excellent aesthetics.

In particular, the Applicant has realized that such products could have additional novel uses, such as, for example, covering doors or other furniture elements which in any case require the weight of the material with which they are associated to be contained.

However, the Applicant has noted that the technological limitation of the production methods which are known places constraints on the construction of slabs with large dimensions, characterized by a contained weight. This is because, while wishing to maintain a high dimension of the slab, a weight reduction is inevitably connected with a reduction of the thickness.

However, the Applicant has observed that the production of slabs having a small thickness (namely less than, for example, 3 millimetres) is prejudicial to the resistance of the product produced, involving possible cracks and breakages of the slab, both during the production process and while using the slab, for example, in the event of transport or putting into place.

This eventuality increases the probability that the final product does not conform to the desired characteristics and further involves an undesirable reduction in the productivity of the installation as a result of the production rejects owing to defects.

Therefore, the Applicant has perceived the need to provide a method for producing artificial stone slabs which allows slabs to be produced in a reliable and repeatable manner with a small thickness and great dimensions.

### Description of the invention

An object of the present invention is to provide a method for producing artificial stone slabs with a small thickness, which is functionally configured to overcome one or more of the disadvantages set out above.

Another object of the present invention is to provide a method for producing an artificial stone slab which is characterized by a thin thickness, namely a thickness less than 3 mm, and with performance levels which are optimized for use as a covering.

Furthermore, an object of the present invention is to provide a method for producing artificial stone slabs which allows optimization of the times necessary for producing the slab, at the same time generating a final product of high quality.

Another object of the present invention is to provide a method for producing artificial stone slabs which allows a reduction in the costs connected with the raw materials used.

Furthermore, an object of the present invention is to provide a method for producing artificial stone slabs, with which to produce slabs having a weight, for the same dimensions, which is contained with respect to the slabs constructed using methods of the prior art.

Finally, an object of the present invention is to provide a method for producing artificial stone slabs which involves a smaller environmental impact with respect to the methods of the prior art.

The problem indicated above is solved and the objects indicated above are achieved by the present invention by means of a method for producing artificial stone slabs comprising one or more of the features expressed in the appended claims, which form an integral part of the present description.

In a first aspect thereof, the present invention is directed towards a method for producing artificial stone slabs comprising grinding an inert material comprising silicates having an aluminium oxide content greater than or equal to 25% by weight, until a mixture of granulated material is obtained.

Preferably, a coarse fraction of granules of the mixture of granulated material, having a diameter greater than 300 µm, is 70% by weight of the total weight of the mixture.

Preferably, the method comprises spraying and drying a suspension comprising said granulated material by means of an atomizing device until an atomized material is obtained.

Preferably, the method comprises depositing the atomized material on at least one movable surface of a compacting device.

Preferably, the method comprises compacting the atomized material on the movable surface of a compacting device in order to obtain a slab of compacted material.

Preferably, the method comprises heating the slab of compacted material to a temperature between 50°C and 1250°C for a time period of less than or equal to 45 min and greater than or equal to 10 min in order to obtain a slab of consolidated material.

This allows an artificial stone slab to be obtained with a small thickness, that is to say less than 3 mm, and with relevant dimensions, having optimum performance levels in terms of resistance and at the same time a contained weight.

In a second aspect thereof, the present invention is directed towards an artificial stone slab obtained by the method according to the first aspect.

In at least one of the aspects described above, the present invention can further have at least one of the following preferred features taken individually or in conjunction with any one of the other preferred features described.

Preferably, the atomized material has a variable particle size between about 0.1 µm and 800 µm.

Preferably, the suspension which is subjected to spraying and drying is a heterogeneous mixture, in which the solid phase comprises natural or artificial inert material, such as, for example, recycled or waste stone material or inert material.

Preferably, the depositing comprises laying on the movable surface a layer of atomized material having a width between 150 mm and 2000 **mm.**

Preferably, the depositing comprises laying on the movable surface a layer of atomized material having a thickness between 1.5 mm and 5 **mm.**

Preferably, the compacting comprises pressing the layer of atomized material deposited on the movable surface, by means of a compacting device comprising at least one pressure roller.

Preferably, the compacting comprises pressing the layer of atomized material deposited on the movable surface at a pressure of between 280 bar and 450 bar so as to form the slab of compacted material.

On the basis of the parameters of the pressure applied by the compacting device and the values which characterize the arrangement of the atomized material layer which is deposited, the method according to the invention ensures the production of artificial stone slabs having a width between 150 mm and 2000 mm and a thickness of 2 mm.

Preferably, the method comprises transporting the slab of compacted material from the compacting device to a heating device, by means of transporting devices comprising side-by-side cylindrical elements.

Preferably, the side-by-side cylindrical elements are suitable for being placed in rotation with respect to their own longitudinal axis and have a diameter equal to or less than 55 mm. Preferably, the cylindrical elements have a diameter between 10 mm and 40 mm.

Preferably, the cylindrical elements are arranged side-by-side so that each longitudinal axis is substantially parallel with the longitudinal axis of the cylindrical element adjacent thereto and so that the distance between the longitudinal axes of two adjacent cylindrical elements is between 15 mm and 70 mm, preferably having a value of 35 mm.

In this manner, the continuity of the support surface is advantageously optimized so as to limit the stresses on the transported material and to minimize the possibility of deformations or formation of defects therein.

According to a preferred embodiment, the heating of the compacted material slab lasts 18 minutes.

Preferably, the heating of the compacted material slab comprises operating a first heating by means of a first heating device for a first time period Δt₁, at a temperature between 50°C and 350°C.

Preferably, the first time period Δt₁ is variable between 4 minutes and 12 minutes.

Preferably, the heating of the compacted material slab includes operating a second heating by means of a second heating device for a second time period Δt₂, at a temperature between 1100°C and 1250°C.

Preferably, the second time period Δt₂ is variable between 6 minutes and 33 minutes.

Preferably, the second heating is carried out after the first heating.

According to this configuration, the time of the heating step is optimized, advantageously leading to an evident saving of energy with respect to the production methods belonging to the prior art.

Preferably, the method comprises coating a surface of the slab of consolidated material by an additional layer of reinforcement.

In this manner, the structure of the slab is further consolidated, improving the characteristics of resistance to stresses.

Preferably, the coating comprises spraying the surface of the slab of consolidated material with a mixture comprising an adhesive substance, at a pressure between 3 bar and 3.5 bar.

A homogeneous distribution of the adhesive substance is thereby ensured and at the same time the integrity of the slab being processed is ensured.

Preferably, the coating comprises spraying the surface of the slab of consolidated material with a mixture comprising an adhesive substance at a quantity of 0.18 kg/m².

This value is advantageously less than the values which characterize the processes of the prior art and therefore leads both to an economic saving and to an improvement of the environmental impact.

Preferably, the additional layer of reinforcement has a thickness between 0.2 mm and 0.6 mm with a mean of 0.4 **mm.**

This value allows a correct connection to be ensured between the surface of the slab and the layer of reinforcement, keeping the thickness of the product finished in this manner contained.

Preferably, the additional layer of reinforcement comprises a mat made of glass fibre.

Preferably, the first heating device is a combustion oven.

Preferably, the second heating device is an electric oven.

In this manner, the consolidation of the material which constitutes the slab passing through this device is carried out in rapid times and homogeneously.

Preferably, the adhesive substance comprises an epoxy resin or a one-part adhesive.

### Brief description of the drawings

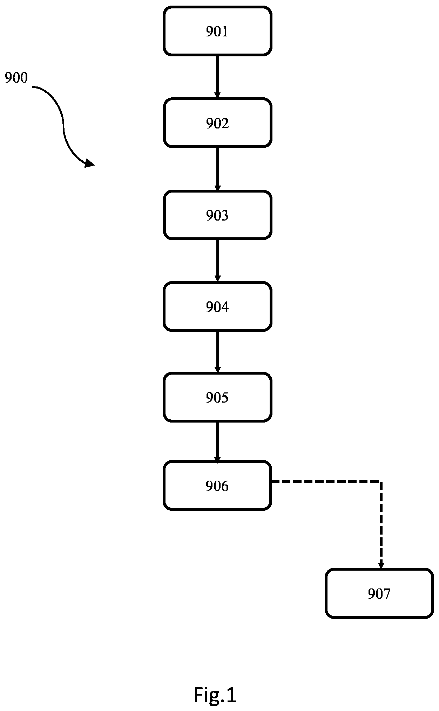

The features and advantages of the invention will be better appreciated from the detailed description of a preferred exemplary embodiment thereof which is illustrated by way of non-limiting example with reference to Figure 1, which depicts a flow chart of a method for producing artificial stone slabs according to an embodiment of the present invention.

### Preferred embodiment of the invention

While the invention is capable of various modifications and alternative constructions, a number of preferred embodiments are shown in the drawings and will be described in detail below. In any case, it must be understood that there is no intention to limit the invention to the specific embodiment illustrated but instead the invention is intended to cover all the modifications, alternative constructions and equivalents which are included in the scope of the invention as defined in the claims.

The use of "for example", "etc.", "or" indicates non-exclusive alternatives without any limitation unless otherwise indicated. The use of "includes" is intended to be understood to mean "includes but not limited to" unless otherwise indicated.

In a preferred embodiment, which is illustrated schematically in the flow chart of Figure 1, the method 100 provides for grinding (block 901) an inert material comprising silicates having an aluminium oxide content greater than or equal to 25% by weight, until a mixture of granulated material is obtained. In particular, this mixture comprises a coarse fraction of granules, having a diameter greater than 300 µm, is 70% by weight of the total weight of the mixture itself.

In a preferred embodiment, the inert material contains silicates having an aluminium oxide content of 27% by weight.

According to these characteristics, the raw materials used confer adequate properties of plasticity on the material to be subjected to the processing operation, in particular allowing efficient behaviour of the material which is subjected to the successive processing steps of pressing the material.

There is thereby advantageously obtained an increase in the properties of compaction of the material which result from the grinding step and which involve a substantial decrease in the processing waste, with resultant advantages in the yield of the entire production process.

Then, the method provides for spraying and drying (block 902) a suspension comprising the granulated material resulting from the grinding step 901 by means of an atomizing device until an atomized material is obtained.

The term "suspension" is intended to be understood to indicate a heterogeneous mixture in which a solid phase is dispersed in a fluid and in which the solid portion is constituted by inert material.

Preferably, the suspension which is subjected to spraying and drying is a heterogeneous mixture in which the solid phase comprises inert material which is natural or artificial, such as, for example, stone material or recycled or waste inert material.

The atomized material resulting from the spraying and drying step is then stored in suitable containers, in which it is kept until being subsequently used.

According to a preferred embodiment, these containers are constituted by movable storage devices with contained dimensions, for example, preferably having a maximum capacity of 2 m³.

In a subsequent step, the method provides for conveying the atomized material towards a compacting device. According to a preferred embodiment, this action is advantageously carried out by means of the movable storage devices which, by providing a rather limited volume for containing the material, are readily able to be moved and interchanged, allowing a high level of flexibility in planning batches of slabs to be produced.

Once the atomized material has been conveyed to the compacting device, the method 900 provides for depositing (block 903) the material on at least one movable surface of the compacting device.

In particular, the material is placed on the movable surface so as to produce a layer of atomized material, the thickness of which is variable between 1.5 mm and 5 mm. This layer further preferably has a width between 150 mm and 2000 mm, even more preferably between 800 mm and 1800 mm.

After the deposition of the atomized material on the movable surface, the method further provides for compacting (block 904) the atomized material on the movable surface in order to obtain a slab of compacted material in the crude state.

This action of compacting 904 comprises pressing the layer of atomized material which is deposited on the movable surface by means of the compacting device comprising at least one pressure roller, at a pressure of between 280 bar and 450 bar, so as to form the slab of compacted material.

According to the invention, the method 900 further comprises transporting (block 905), by means of transporting devices, the slab of compacted material which is obtained by the passage into the compacting device to a heating device.

According to a preferred embodiment, these transport devices comprise side-by-side cylindrical elements, suitable for being placed in rotation with respect to their own longitudinal axis, so as to generate a movement of one or more slabs which are arranged so as to be supported on the cylinders themselves.

According to a preferred configuration, the diameter of said cylindrical elements is equal to or less than 55 mm, preferably it has a value between 10 mm and 40 mm.

Preferably, the cylindrical elements are arranged side-by-side so that each longitudinal axis is substantially parallel with the longitudinal axis of the cylindrical element adjacent thereto and so that the distance between the longitudinal axes of two adjacent cylindrical elements is between 15 mm and 70 mm, preferably having a value of 35 mm.

Then, the method 900 provides for heating (block 906) the slab of compacted material to a temperature between 50°C and 1250°C, for a time period of less than or equal to 45 min.

According to a preferred embodiment, the heating of the slab of compacted material has a duration less than or equal to 25 minutes and greater than or equal to 10 minutes, preferably equal to 18 minutes.

Preferably, the heating action is carried out in a first and a second heating device which are arranged one after the other. There is further advantageously provision for arranging the above-mentioned transport devices, as previously described, not only in order to transport the slab of compacted material from the compacting device to the heating device but also in order to move them inside the first and second heating devices until being discharged therefrom.

According to this preferred configuration of the invention, the heating action 906 comprises operating a first heating by means of the first heating device for a first time period Δt₁, at a temperature between 50°C and 350°C, and thereafter operating a second heating by means of the second heating device for a second time period Δt₂, at a temperature between 1100°C and 1250°C.

Preferably, the first time period Δt₁ is variable between 4 min and 12 min and the second time period Δt₂ is variable between 6 min and 33 min with the condition that the total of the above-mentioned time periods is less than or equal to the maximum value of the heating time described above, that is, less than or equal to 45 min.

Preferably, the first heating device is a combustion oven and the second heating device is an electric oven.

In a preferred embodiment, the method 900 comprises coating (block 907) a surface of the slab of consolidated material, that is, the artificial stone slab obtained at the end of the heating step, by an additional layer of reinforcement.

According to a preferred configuration, the additional layer of reinforcement has a thickness between 0.2 mm and 0.6 mm, with a mean of 0.4 mm.

Preferably, the additional layer of reinforcement comprises a mat made of glass fibre.

In a preferred form of the method 900 according to the invention, the action of coating 907 a surface of the slab of consolidated material which is obtained downstream of the heating, provides for spraying on the surface a mixture including an adhesive substance.

This action is preferably carried out at a pressure between 3 bar and 3.5 bar and with a mass flow rate which is variable between 0.018 kg/m² and 0.02 kg/s.

According to a preferred embodiment, the mixture comprising an adhesive substance is deposited on the surface of the slab of consolidated material at a quantity of 0.18 kg for each square metre of surface.

Preferably, the adhesive substance comprises an epoxy resin or a one-part adhesive.

In other preferred embodiments, the adhesive substance comprises polyurethane adhesives or one-part, thermosetting or reactive or acrylic adhesives.

The invention configured in this manner is capable of a number of modifications and variants, all included within the scope of protection defined by the appended claims.

In conclusion, the materials used and the contingent forms and dimensions may be freely selected in accordance with the specific implementation requirements without thereby departing from the scope of protection of the following claims.

## Claims

1. A method for producing artificial stone slabs comprising:
- grinding (901) an inert material comprising silicates having an aluminium oxide content greater than or equal to 25% by weight, until a mixture of granulated material is obtained in which a coarse fraction of granules, having a diameter greater than 300 µm, is 70% by weight of the total weight of the mixture;
- spraying and drying (902) a suspension comprising the granulated material by means of an atomizing device until an atomized material is obtained;
- depositing (903) the atomized material on at least one movable surface of a compacting device;
- compacting (904) the atomized material on said movable surface, to obtain a slab of compacted material; and
- heating (906) the slab of compacted material to a temperature between 50°C and 1250°C, for a time period of less than or equal to 45 min and greater than or equal to 10 min, to obtain a slab of consolidated material.

2. A method according to claim 1, wherein said depositing (903) comprises laying on said movable surface a layer of atomized material having a width between 150 mm and 2000 mm and a thickness between 1.5 mm and 5 mm.

3. A method according to claim 1 or 2, wherein said compacting (904) comprises pressing the layer of atomized material deposited on the movable surface, by means of a compacting device comprising at least one pressure roller, at a pressure of between 280 bar and 450 bar, so as to form the slab of compacted material.

4. A method according to any one of the preceding claims, comprising transporting (905) the slab of compacted material from the compacting device to a heating device, by means of transporting devices comprising side-by-side cylindrical elements, suitable for being placed in rotation with respect to their own longitudinal axis, and having a diameter equal to or less than 55 mm.

5. A method according to any one of the preceding claims, wherein said heating (906) of the compacted material slab includes operating a first heating by means of a first heating device for a first time period Δt₁, at a temperature between 50°C and 350°C, and thereafter operating a second heating by means of a second heating device for a second time period Δt₂, at a temperature between 1100°C and 1250°C.

6. A method according to any one of the preceding claims, comprising coating (907) a surface of the slab of consolidated material by an additional layer of reinforcement.

7. A method according to claim 6, wherein said coating (907) includes spraying the surface of the slab of consolidated material, with a mixture including an adhesive substance, at a pressure between 3 bar and 3.5 bar and in an amount of 0.18 kg/m².

8. A method according to any one of the preceding claims, in which said atomized material has a variable particle size between about 0.1 µm and 800 µm.

9. A method according to claim 7 or 8, wherein said adhesive substance comprises an epoxy resin or a one-part adhesive.

10. An artificial stone slab obtained by the method according to any one of the preceding claims.
